## Europäisches Patentamt

## European Patent Office

## Office européen des brevets

(19)

(11) Veröffentlichungsnummer: **0 253 757**
**B1**

(12) **EUROPÄISCHE PATENTSCHRIFT**

(45) Veröffentlichungstag der Patentschrift:
**19.09.90**

(51) Int. Cl.⁵: **G09B 23/34**

(21) Anmeldenummer: **87730063.2**

(22) Anmeldetag: **10.06.87**

(54) **Kiefermodell.**

(30) Priorität: **13.06.86 DE 3619869**

(43) Veröffentlichungstag der Anmeldung:
**20.01.88 Patentblatt 88/3**

(45) Bekanntmachung des Hinweises auf die Patenterteilung:
**19.09.90 Patentblatt 90/38**

(84) Benannte Vertragsstaaten:
**AT BE CH DE ES FR GB IT LI NL SE**

(56) Entgegenhaltungen:
**WO-A-84/03978**
**DE-C- 530 422**

(73) Patentinhaber: **Oestreich, Gerd, Wilhelmstrasse 96,**
**D-1000 Berlin 20(DE)**

(72) Erfinder: **Oestreich, Gerd, Wilhelmstrasse 96,**
**D-1000 Berlin 20(DE)**

(74) Vertreter: **Böning, Manfred, Dr. Ing. et al, Patentanwälte**
**Dipl.-Ing. Dieter Jander Dr. Ing. Manfred Böning**
**Kurfürstendamm 66, D-1000 Berlin 15(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Kiefermodell mit mindestens einem an einem Abschnitt eines Kieferbogens angeordneten zur Demonstration zahnerhaltender und teilprotheitischer zahnmedizinischer Arbeiten dienenden Einstazteil.

Kiefermodelle der vorstehenden Art werden vornehmlich vom Zahnarzt im Rahmen der Patientenaufklärung verwendet, da sie gegenüber reinen Erläuterungen oder Erläuterungen unter Zuhilfenahme von Bildmaterial den Vorteil grösserer Anschaulichkeit bieten. Bekannt sind Kiefermodelle, bei denen verschiedene Einsatzteile nacheinander an die für den Zahnersatz vorgesehene Stelle einsetz- und arretierbar sind. Bei den bekannten Modellen, siehe z.B. WO 84/03978, ist der Austausch der Einsatzteile vergleichsweise mühsam und zeitraubend und die Voraussetzungen für einen schnellen und direkten, d.h. eine Entscheidungsfindung für die eine oder andere Ausführungsform fördernden Vergleich unterschiedlicher Zahnersatzarten sind folglich nicht gegeben. Als nachteilig erweist sich bei den bekannten Kiedermodellen darüberhinaus der Umstand, dass die Befestigungsmechanismen für die Einsatzteile das Erscheinungsbild des mit dem Zahnersatz ausgestatteten Kieferabschnittes entfremden und dass Alternativlösungen zeigende Austauschstücke leicht verloren gehen und/oder beschädigt werden können.

Der Erfindung liegt die Aufgabe zugrunde, ein Kiefermodell zu schaffen, bei dem die oben angedeuteten Nachteile eliminiert sind und das insbesondere eine schnelle und unkomplizierte Überführung von Zahnersatzalternativen in die Funktionslage ermöglicht. Diese Aufgabe wird erfindungsgemäss dadurch gelöst, dass das Einsatzteil aus einem drehbar in einer Ausnehmung des Kieferbogens gelagerten Grundkörper besteht, der Nachbildungen des Kieferbogens im Bereich der Ausnehmung formt und an seinem Umfang mit einem in die Funktionslage schwenkbarem. insbesondere von Einzelzähnen, Zahngruppen oder Brücken gebildeten Zahnersatz oder zu dessen Befestigung dienenden, präparierte Zähne nachbildenden Stümpfen versehen ist.

Das erfindungsgemässe Kiefermodell ist nicht nur einfach handhabbar, sondern es gestattet darüberhinaus auf engstem Raum einen schnellen, direkten Vergleich von Zahnersatzalternativen, wobei die drehbare Anordung des Einsatzteiles die Betrachtung des Zahnersatzes von verschiedenen Seiten erleichtert. Der Umstand, dass sich die jeweiligen Zahnersatzformen unverlierbar auf einem Grundkörper anordnen lassen und besondere komplizierte Befestigungs- und Arretierungsmittel überflüssig sind, wirkt sich zudem kostengünstig aus.

Die Erfindung wird im folgenden anhand eines in der beigefügten Zeichnung dargestellten Ausführungsbeispieles näher erläutert. Es zeigen

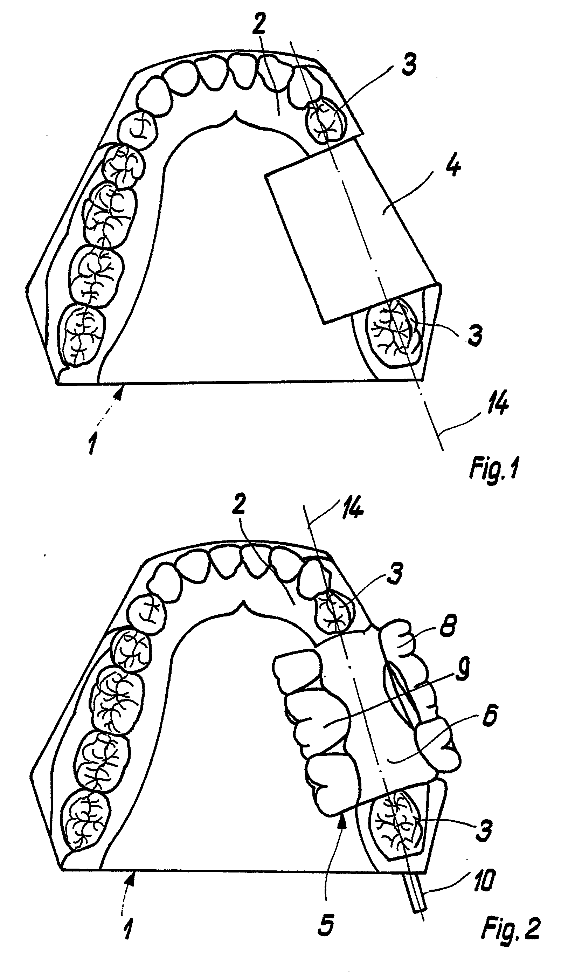

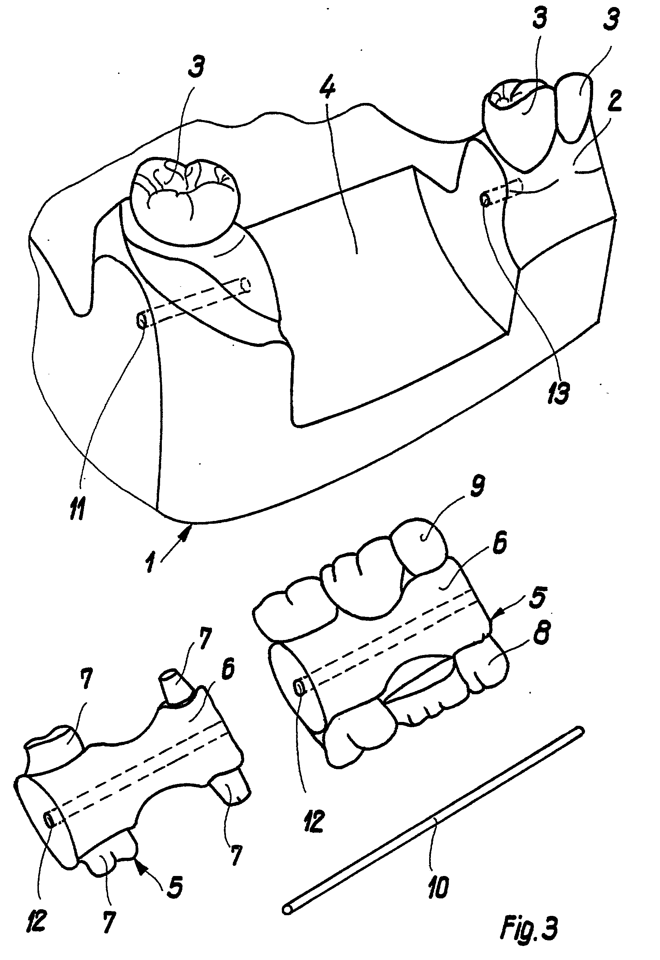

Fig. 1 die Draufsicht auf ein Kiefermodell ohne Einsatzteil;

Fig. 2 die Draufsicht auf das Kiefermodell gemäß Fig. 1 mit einem Einsatzteil;

Fig. 3 in explosionsartiger perspektivischer Darstellung einen Teil eines Kiefermodelles mit zwei Einsatzteilen und einer zur Befestigung des jeweiligen Einsatzteiles dienenden Achse;

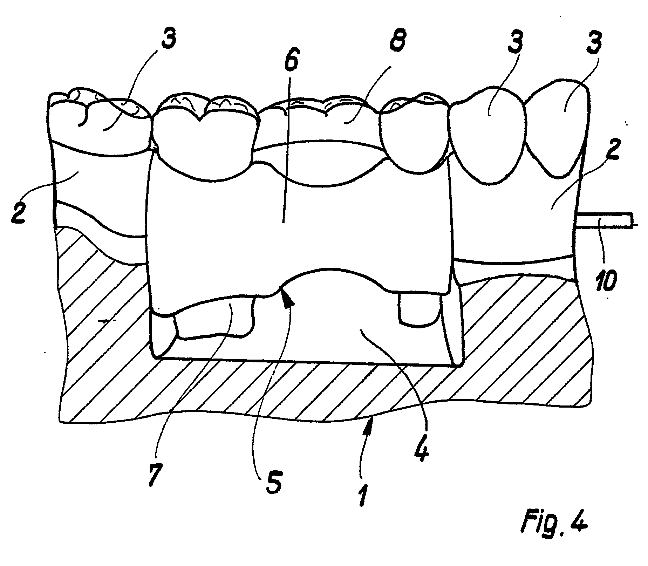

Fig. 4 einen Schnitt durch einen Teil des Kiefermodelles gemäss den vorangehenden Figuren bei in die korrekte Position gedrehtem Zahnersatz.

In den Figuren ist mit 1 allgemein ein Kiefer mit einem Kieferbogen 2 bezeichnet. Der Kieferbogen trägt eine Reihe gesunder Zähne 3 und ist in dem Bereich, in dem ein Zahnersatz vorgesehen ist, mit einer Ausnehmung 4 versehen. In die Ausnehmung 4 passt ein Einsatzteil 5, das aus einem Grundkörper 6 und präparierten Zahnformen 7 oder Zahnersatzformen 8 bzw. 9 besteht. Die Zahnersatzform 8 kann beispielsweise von einer Gold-Schwebebrücke und die Zahnersatzform 9 von einer Porzellanbrücke gebildet werden. 10 ist ein zylindrischer Drahtstift, welcher in Bohrungen 11, 12 und 13 des Kieferbogens 2 bzw. des Einsatzteiles 5 einführbar ist und die Drehachse 14 für das Einsatzteil bildet.

Das Einsatzteil 5 lässt sich leicht um seine Drehachse schwenken. Bei Bedarf kann der Drahtstift 10 leicht entfernt und auch ein Austausch von Einsatzteilen vorgenommen werden.

Wie eingangs bereits dargelegt, bietet das beschriebene Kiefermodell gegenüber Bildmaterial und bisher üblichen Modellen den Vorteil, dass mit ihm auf kleinstem Raum schnell mehrere Informationen gegeben werden können, ohne dass ein Austausch von Alternativlösungen nötig ist. So wird beispielsweise die Wahl zwischen einer Porzellanbrücke und einer Gold-Schwebebrücke für den Patienten spürbar erleichtert.

Das Kiefermodell kann darüber hinaus selbstverständlich auch als Anschauungsmittel in Lehrveranstaltungen für Studenten und Lehrlinge eingesetzt werden.

## Patentansprüche

1. Kiefermodell mit mindestens einem an einem Abschnitt eines Kieferbogens angeordneten zur Demonstration zahnerhaltender und teilprothetischer zahnmedizinischer Arbeiten dienenden Einsatzteil, dadurch **gekennnzeichnet**, dass das Einsatzteil (5) aus einem drehbar in einer Ausnehmung (4) des Kieferbogens (2) gelagerten Grundkörper (6) besteht, der Nachbildungen des Kieferbogens (2) im Bereich der Ausnehmung (4) formt und an seinem Umfang mit in die Funktionslage schwenkbarem insbesondere von Einzelzähnen, Zahngruppen (9) oder Brücken (8) gebildeten Zahnersatz oder zu dessen Befestigung dienenden, präparierte Zähne nachbildenden Stümpfen (7) versehen ist.

2. Kiefermodell nach Anspruch 1, dadurch **gekennzeichnet**, dass das Einsatzteil (5) eine Drehachse (14) aufweist, die in Richtung des Kieferbogens (2) verläuft.

3. Kiefermodell nach Anspruch 2, dadurch **gekennzeichnet**, dass das Einsatzteil (5) und der Kieferbogen (2) mit fluchtenden Bohrungen (11, 12, 13) zur Aufnahme eines zylindrischen Drahtstiftes (10) versehen sind, der die Drehachse (14) für das Einsatzteil (5) bildet.

4. Kiefermodell nach Anspruch 3, dadurch **gekennzeichnet**, dass der Drahtstift (10) vom Ende des Kieferbogens (2) in die fluchtenden Bohrungen (11, 12, 13) des Kieferbogen (2) und des Einsatzteiles (5) einführbar ist.

**Claims**

1. A jaw model comprising at least one insert part disposed on a portion of the mandibular arch for demonstrating dental maintenance and denture work, characterised in that the insert part (5) comprises a base member (6) rotatably mounted in a recess (4) in the mandibular arch (2) and forming imitations of the mandibular arch (2) in the neighbourhood of the recess (4), and provided at its periphery with a dental prosthesis pivotable into the operating position and formed more particularly by individual teeth or groups (9) of teeth or bridges (8), or stumps (7) for securing the prosthesis and simulating prepared teeth.

2. A jaw model according to claim 1, characterised in that the insert part (5) has a pivot (14) extending in the direction of the mandibular arch (2).

3. A jaw model according to claim 2, characterised in that the insert part (5) and the mandibular arch (2) are formed with aligned bores (11, 12, 13) for receiving a cylindrical wire pin (10) which constitutes the pivot (14) for the insert part (5).

4. A jaw model according to claim 3, characterised in that the wire pin (10) is insertable from the end of the mandibular arch (2) into the aligned bores (11, 12, 13) of the mandibular arch (2) and the insert part (5).

**Revendications**

1. Modèle maxillaire comprenant au moins une pièce rapportée disposée sur un tronçon d'un arc maxillaire et servant à la démonstration de travaux de médecine dentaire, d'entretien des dents et de prothèse partielle, caractérisé en ce que la pièce rapportée (5) est constituée d'un corps de base (6) qui est monté pivotant dans un évidement (4) de l'arc maxillaire (2) et forme des simulations de l'arc maxillaire (2) dans la zone de cet évidement (4), en étant muni, sur sa périphérie, soit d'une prothèse dentaire, qu'on peut faire pivoter dans la position fonctionnelle et qui est notamment formée de dents séparées, de groupes de dents (9) ou de bridges (8), soit de moignons (7) simulant des dents préparées et servant à la fixation de cette prothèse dentaire.

2. Modèle maxillaire suivant la revendication 1, caractérisé en ce que la pièce rapportée (5) comporte un axe de pivotement (14) qui s'étend suivant l'orientation de l'arc maxillaire (2).

3. Modèle maxillaire suivant la revendication 2, caractérisé en ce que la pièce rapportée (5) et l'arc maxillaire (2) sont pourvus de perçages alignés (11, 12, 13) destinés à recevoir une tige cylindrique en fil métallique (10) qui constitue l'axe de pivotement (14) prévu pour la pièce rapportée (5).

4. Modèle maxillaire suivant la revendication 3, caractérisé en ce que la tige en fil métallique (10) peut être introduite dans les perçages alignés (11, 12, 13) de l'arc maxillaire (2) et de la pièce rapportée (5) à partir de l'extrémité de l'arc maxillaire (2).

Fig. 1

Fig. 2

Fig.3

Fig. 4